# EUROPEAN PATENT SPECIFICATION

(11) **EP 4 603 907 B1**
(45) Date of publication and mention of the grant of the patent: **04.11.2026**
(21) Application number: 24213932.7
(22) Date of filing: 19.11.2024
(51) Int. Cl.: G02F 1/1339, G02F 1/1333

(54) **DISPLAY PANEL**
ANZEIGETAFEL
PANNEAU D'AFFICHAGE

(30) Priority: 16.02.2024 US 202463554168 P
(43) Date of publication of application: 20.08.2025
(73) Proprietor: Hannstar Display Corporation, Taipei City 114762 (TW)
(72) Inventor: CHIAO, Yu-Chi, 114762 Taipei City (TW); CHANG, Chung Lin, 114762 Taipei City (TW)
(74) Representative: Becker, Eberhard

(56) References cited:
- WO-A1-2012/060302
- WO-A1-2019/127739
- JP-A- 2011 237 537
- US-A1- 2007 097 312

## Description

### BACKGROUND OF THE INVENTION

### Field of the Invention

The invention relates to a display panel, and in particular, to a display panel provided with a plurality of spacers.

### Description of Related Art

Since a reflective display panel uses natural light or ambient light as the light source for display, without a necessity of being paired with backlight or front-light for display. Therefore the reflective display panel has good energy-saving characteristics. However, as the size of the reflective display panel is more and more large, the brightness of the light reflected towards the viewer is more significantly different between the center and the edge of the display panel, resulting in the phenomenon of uneven brightness and darkness in the display image seen by the viewer.

WO 2019/127739 A1 relates to a curved display device and a display panel thereof, including a CF substrate, a TFT substrate, multiple spacers, a liquid crystal layer and a sealing layer, and the spacers located in the middle area generate less stress on the liquid crystal in the middle area than the spacers located in the edge areas, so that the CF substrate and the TFT substrate maintain an equal distance. US 2007/097312 A1 relates to a liquid crystal display including a first substrate having a display area and a peripheral area and including a plurality of pixels formed in the display area, a second substrate facing the first substrate, and a plurality of first groups of bead spacers and a plurality of second groups of bead spacers disposed between the first substrate and the second substrate, the first groups of bead spacers have a different size or different elasticity coefficient than the second groups of bead spacers, and include a plurality of bead spacers, respectively. WO 2012/060302 A1 relates to liquid crystal display device including: a pair of substrates; a liquid crystal layer sandwiched between the pair of substrates; a seal material provided so as to surround the liquid crystal layer; a plurality of spacers provided so as to define the spacing between the pair of substrates; an alignment film provided on the liquid crystal layer side of at least one of the pair of substrates; and an alignment maintaining layer including a polymer formed by polymerizing a polymerizable compound, the alignment maintaining layer being provided to the liquid crystal layer side of the alignment film. JP2011237537 discloses an LCD display having different numbers of spacer elements in the peripheral and main display areas. It addresses the problem of luminance unevenness.

### SUMMARY OF THE INVENTION

The invention is set out in the appended set of claims. The following disclosure serves a better understanding of the present invention. The invention provides a display panel having better display brightness uniformity.

In an embodiment of the invention, the display panel further includes a plurality of second edge display units disposed in the edge display area. The plurality of first edge display units and the plurality of second edge display units are alternately arranged along at least one direction. The plurality of spacers also include a plurality of second edge spacers overlapped with each of the second edge display units, and a quantity of the plurality of second edge spacers in each of the second edge display units is different from the quantity of the plurality of first edge spacers in each of the first edge display units.

In an embodiment of the invention, the quantity of the plurality of second edge spacers in each of the second edge display units of the display panel is equal to the quantity of the plurality of central spacers in each of the central display units.

In an embodiment of the invention, the quantity of the plurality of second edge spacers in each of the second edge display units of the display panel is greater than the quantity of the plurality of central spacers in each of the central display units.

In an embodiment of the invention, the quantity of the plurality of second edge spacers in each of the second edge display units of the display panel is less than the quantity of the plurality of first edge spacers in each of the first edge display units.

In an embodiment of the invention, each of the central display units of the display panel includes a first pixel structure and a second pixel structure arranged along a first direction. Each of the central spacers overlapped with the first pixel structure is offset along the first direction from each of the central spacers overlapped with the second pixel structure.

In an embodiment of the invention, each of the first edge display units of the display panel includes another first pixel structure and another second pixel structure arranged along the first direction. Each of the plurality of first edge spacers overlapped with the another first pixel structure is offset along the first direction from each of the first edge spacers overlapped with the another second pixel structure.

In an embodiment of the invention, the display panel further includes a plurality of second edge display units disposed in the edge display area. The plurality of first edge display units and the plurality of second edge display units are alternately arranged along at least one direction. The plurality of spacers also include a plurality of second edge spacers overlapped with each of the second edge display units, and a quantity of the plurality of second edge spacers in each of the second edge display units is different from the quantity of the plurality of first edge spacers in each of the first edge display units.

In an embodiment of the invention, each of the second edge display units of the display panel includes yet another first pixel structure and yet another second pixel structure arranged along the first direction. Each of the plurality of second edge spacers overlapped with the yet another first pixel structure is offset along the first direction from each of the second edge spacers overlapped with the yet another second pixel structure

In an embodiment of the invention, each of the first edge display units of the display panel includes a first pixel structure and a second pixel structure arranged along the first direction. The substrate edge includes a first edge extended in a second direction. The second direction is intersected with the first direction. The second pixel structure is located between the first pixel structure and the first edge. A quantity of a portion in the plurality of first edge spacers overlapped with the second pixel structure is greater than a quantity of another portion in the first edge spacers overlapped with the first pixel structure.

Based on the above, in the display panel of an embodiment of the invention, the liquid-crystal layer and the plurality of spacers are provided between the first substrate and the second substrate. The spacers are dispersed among the plurality of central display units in the central display area and the plurality of edge display units in the edge display area. Since the quantity of gaps in each of the edge display units is greater than the quantity of gaps in each of the central display units, the difference in display brightness between the edge display area and the central display area of the display panel may be effectively reduced, thus helping to improve the uniformity of display brightness of the display panel.

### BRIEF DESCRIPTION OF THE DRAWINGS

FIG. 1 is a schematic front view of a display panel according to the first embodiment of the invention.
FIG. 2 is an enlarged schematic view of a portion of a film layer of one display unit of FIG. 1.
FIG. 3 is an enlarged schematic view of a portion of the film layer of the central display unit or the second edge display unit of FIG. 1.
FIG. 4 is a schematic cross-sectional view of the central display unit or the second edge display unit of FIG. 3.
FIG. 5 is an enlarged schematic view of a portion of the film layer of the first edge display unit of FIG. 1.
FIG. 6 is a schematic cross-sectional view of the first edge display unit of FIG. 5.
FIG. 7 is an enlarged schematic view of a portion of the film layer of another first edge display unit of FIG. 1.
FIG. 8 is a schematic front view of a display panel according to the second embodiment of the invention.
FIG. 9 is an enlarged schematic view of a portion of the film layer of the first edge display unit of FIG. 8.
FIG. 10 is an enlarged schematic view of a portion of the film layer of the second edge display unit of FIG. 8.
FIG. 11 is an enlarged schematic view of a portion of the film layer of another second edge display unit of FIG. 8.
FIG. 12 is a schematic front view of a display panel according to the third embodiment of the invention.
FIG. 13 is an enlarged schematic view of a portion of a film layer of the central display unit of FIG. 12.
FIG. 14 is an enlarged schematic view of a portion of the film layer of the first edge display unit of FIG. 12.
FIG. 15 is an enlarged schematic view of a portion of the film layer of another first edge display unit of FIG. 12.

### DESCRIPTION OF THE EMBODIMENTS

The aforementioned and other technical contents, features, and effects of the invention will be clearly presented in the following detailed description of preferred embodiments with reference to the drawings. Directional terms mentioned in the following embodiments, such as up, down, left, right, front or back, etc., are only for reference to the directions in the attached drawings. Accordingly, the directional terms used are illustrative, not limiting, of the invention.

Words such as "first" and "second" used in the specification and claims are used to modify elements, which do not themselves imply and represent that the (or these) elements have any previous ordinal numbers, nor do they imply an order of a certain element with another element, or an order in manufacturing methods. These ordinal numbers are used to clearly distinguish an element having a certain designation from another element having the same designation. The same wording may be not used in the claims and the specification. Accordingly, a first member in the specification may be a second member in the claims.

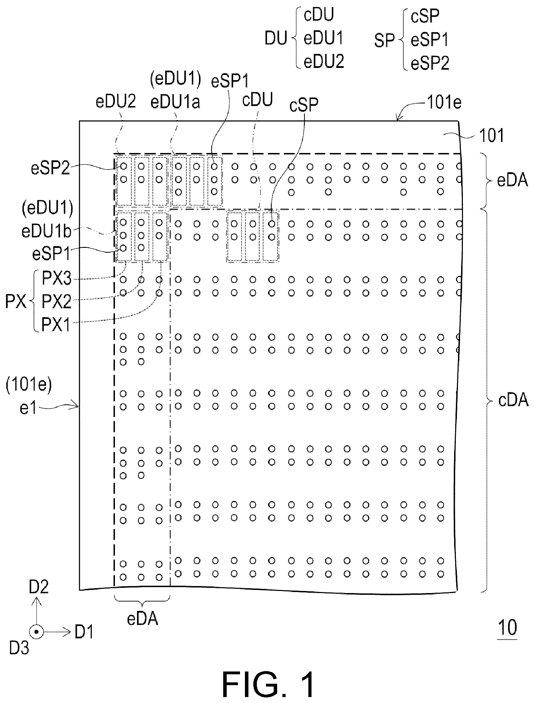

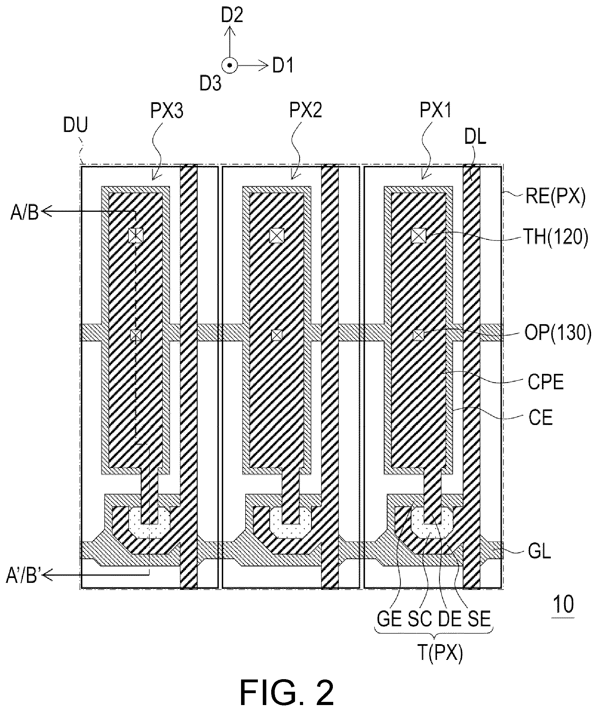

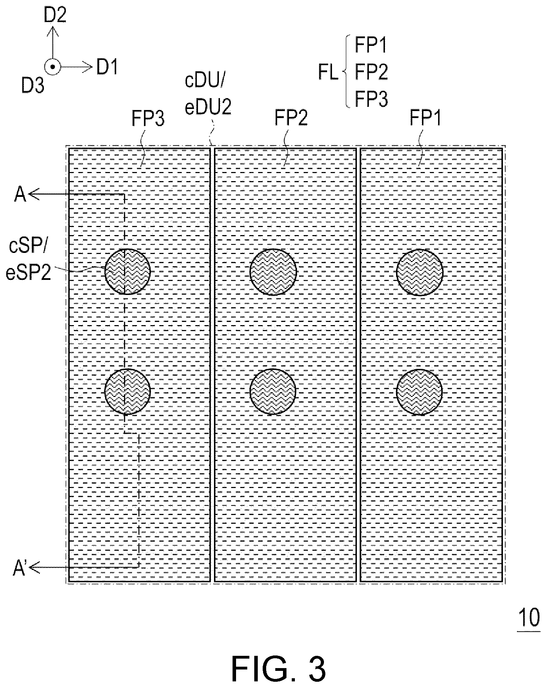

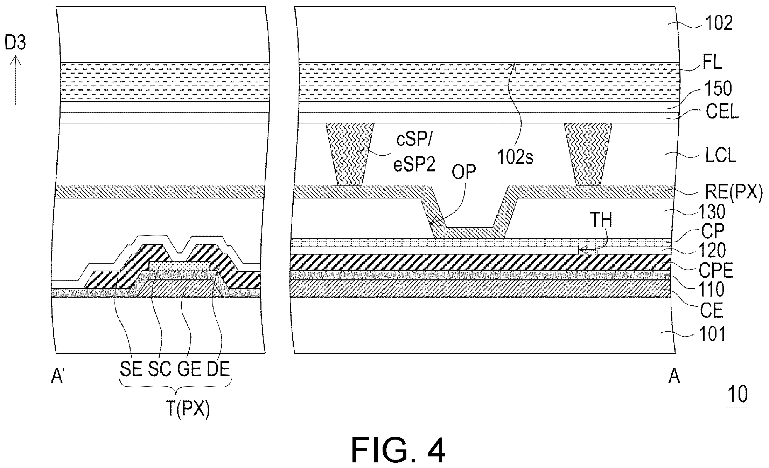

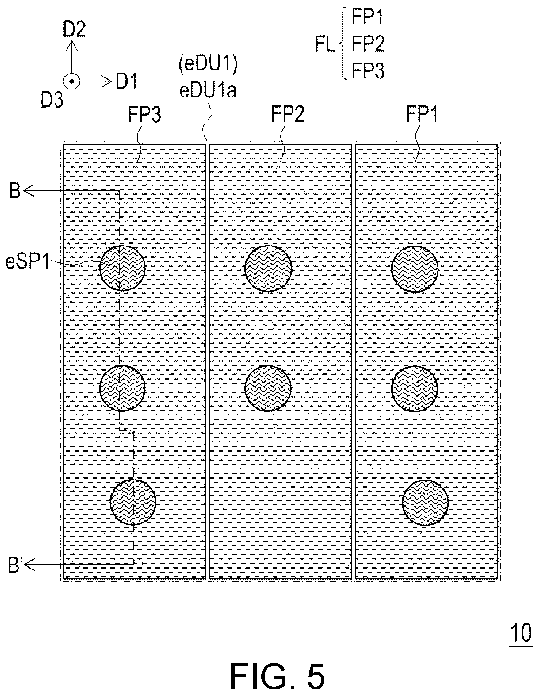

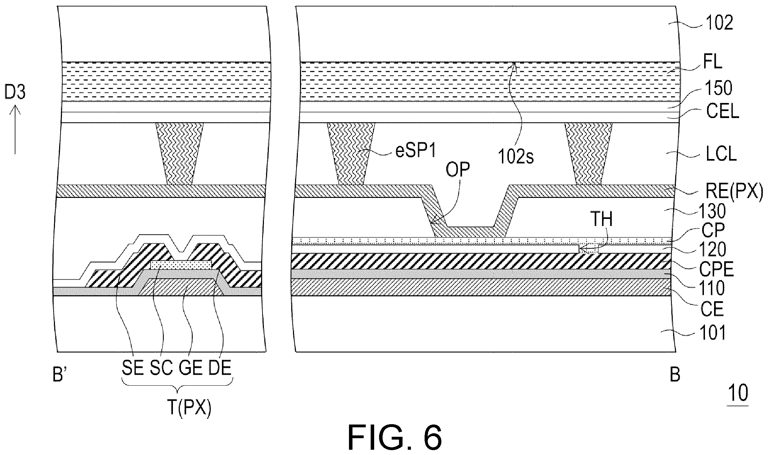

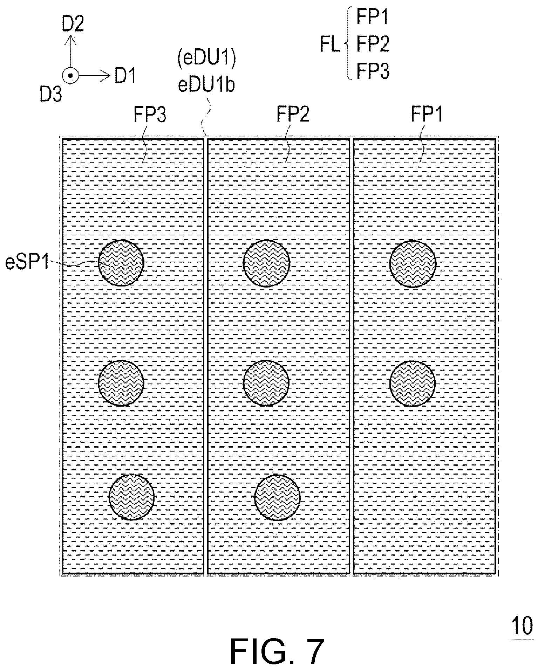

FIG. 1 is a schematic front view of a display panel according to the first embodiment of the invention. FIG. 2 is an enlarged schematic view of a portion of a film layer of one display unit of FIG. 1. FIG. 3 is an enlarged schematic view of a portion of the film layer of the central display unit or the second edge display unit of FIG. 1. FIG. 4 is a schematic cross-sectional view of the central display unit or the second edge display unit of FIG. 3. FIG. 5 is an enlarged schematic view of a portion of the film layer of the first edge display unit of FIG. 1. FIG. 6 is a schematic cross-sectional view of the first edge display unit of FIG. 5. FIG. 7 is an enlarged schematic view of a portion of the film layer of another first edge display unit of FIG. 1.

It should be noted that, for the sake of clear presentation, only a portion of the film layer of FIG. 4 is shown in all of FIG. 1, FIG. 2, and FIG. 3. FIG. 4 corresponds to the section line A-A' of FIG. 2 and FIG. 3. FIG. 6 corresponds to the section line B-B' of FIG. 2 and FIG. 5.

Referring to FIG. 1 to FIG. 4, a display panel 10 includes a first substrate 101, a second substrate 102, a plurality of data lines DL, a plurality of scan lines GL, a plurality of pixel structures PX, and a liquid-crystal layer LCL. The first substrate 101 and the second substrate 102 are overlapped with each other, and the liquid-crystal layer LCL is disposed between the first substrate 101 and the second substrate 102. The overlapping relationship here means, for example, that the first substrate 101 and the second substrate 102 are overlapped with each other along the normal direction (e.g., a direction D3) of a substrate surface 102s of the second substrate 102. Unless otherwise mentioned below, the overlapping relationship between two members is defined in this way, and the overlapping direction thereof is not described again.

In the present embodiment, for example, the plurality of data lines DL are arranged at intervals on the first substrate 101 along a direction D1 and extended in a direction D2, and, for example, the plurality of scan lines GL are arranged at intervals on the first substrate 101 along the direction D2 and extended in the direction D1. More specifically, the scan lines GL are intersected with the data lines DL and define a plurality of pixel areas of the display panel 10.

The plurality of pixel structures PX are respectively disposed in the pixel areas, each of which is electrically connected to one scan line GL and one data line DL. For example, the plurality of pixel structures PX may be arranged in a plurality of rows and a plurality of columns along the direction D1 and the direction D2 respectively, that is, the pixel structures PX are arranged in an array on the first substrate 101. Each of the pixel structures PX may include an active element T and a reflective electrode RE electrically connected to each other. More specifically, the display panel 10 of the present embodiment may be a reflective liquid-crystal display panel, but the invention is not limited thereto. In other embodiments, the display panel may also be a transflective liquid-crystal display panel or a micro-transflective liquid-crystal display panel.

In the present embodiment, the method of forming the active element T may include the following steps: sequentially forming a gate GE, a gate insulating layer 110, a semiconductor pattern SC, a source SE, and a drain DE on the first substrate 101. The semiconductor pattern SC is overlapped with the gate GE. The source SE and the drain DE are overlapped with the semiconductor pattern SC and are in electrical contact with two different areas of the semiconductor pattern SC. In the present embodiment, the gate GE of the active element T may be optionally disposed under the semiconductor pattern SC to form a bottom-gate thin-film transistor (TFT), but the invention is not limited thereto. In other embodiments, the gate of the active element may also be optionally disposed above the semiconductor pattern to form a top-gate TFT.

Furthermore, the active element T may be covered with the insulating layer 120 and the insulating layer 130 in sequence. In the present embodiment, the insulating layer 120 is, for example, a passivation layer, and the insulating layer 130 is, for example, a planarization layer. For example, in the present embodiment, the pixel structures PX may also include a common electrode CE, a capacitive electrode CPE, and a conductive pattern CP overlapped with each other, but the invention is not limited thereto. The common electrode CE is disposed between the first substrate 101 and the gate insulating layer 110. The capacitive electrode CPE is disposed between the gate insulating layer 110 and the insulating layer 120. Therefore, the capacitive electrode CPE, the common electrode CE, and the sandwiched gate insulating layer 110 therebetween may form a storage capacitor. In some other embodiments, the pixel structures PX may not include the common electrode CE and the capacitive electrode CPE overlapped with each other. The conductive pattern CP is disposed between the insulating layer 120 and the insulating layer 130.

In the present embodiment, the insulating layer 130 has an opening OP, and the opening OP exposes a portion of the surface of the conductive pattern CP. The reflective electrode RE of the pixel structures PX is disposed on the surface of the insulating layer 130 and electrically connected to the conductive pattern CP via the opening OP of the insulating layer 130. The conductive pattern CP is electrically connected to the capacitive electrode CPE via a contact hole TH of the insulating layer 120, and the capacitive electrode CPE may be extended from the drain DE (that is, the drain DE and the capacitive electrode CPE are coupled to each other) of the active element T, but the invention is not limited thereto. In some other embodiments, the pixel structures PX may not include the conductive pattern CP, and the reflective electrode RE is electrically connected to the drain electrode DE of the active element T via a through hole penetrating the insulating layer 130 and the insulating layer 120.

It should be noted that the gate GE, the source SE, the drain DE, the semiconductor pattern SC, the gate insulating layer 110, the passivation layer (i.e., the insulating layer 120), and the planarization layer (i.e., the insulating layer 130) may respectively be implemented by any gate, any source, any drain, any semiconductor pattern, any gate insulating layer, any passivation layer, and any planarization layer used in a display panel by those skilled in the art, and the gate GE, the source SE, the drain DE, the semiconductor pattern SC, the gate insulating layer 110, the passivation layer, and the planarization layer may respectively be formed by any method known to those skilled in the art, and therefore are not described in detail here.

Further, the display panel 10 further includes a filter layer FL disposed on the second substrate 102. The filter layer FL includes a plurality of filter patterns, and the filter patterns are respectively overlapped with the plurality of reflective electrodes RE of the plurality of pixel structures PX. In the present embodiment, the plurality of filter patterns include, for example, a filter pattern FP1, a filter pattern FP2, and a filter pattern FP3, and the filter colors of the three filter patterns are all different. For example, the filter pattern FP1 is suitable for passing red light, the filter pattern FP2 is suitable for passing green light, and the filter pattern FP3 is suitable for passing blue light.

In the present embodiment, the display panel 10 may be provided with a plurality of display units DU. Each of the display units DU may include three pixel structures PX, such as a pixel structure PX1, a pixel structure PX2, and a pixel structure PX3. The pixel structure PX1, the pixel structure PX2, and the pixel structure PX3 are respectively overlapped with the filter pattern FP1, the filter pattern FP2, and the filter pattern FP3 of different filter colors to display different colors (the corresponding relationship shown in FIG. 2 and FIG. 3). From another point of view, each of the pixel structures PX may be regarded as a pixel structure of one subpixel, while each of the display units DU may be regarded as a pixel structure of one pixel. In some other embodiments, the quantity of the pixel structures PX in each of the display units DU may be greater than 3 or less than 3, and the invention is not limited thereto.

In the present embodiment, a common electrode layer CEL and a covering layer 150 may also be provided on the second substrate 102, but the invention is not limited thereto. In some other embodiments, the common electrode layer CEL may be disposed on the first substrate 101, that is, located between the first substrate 101 and the liquid-crystal layer LCL. The common electrode layer CEL may be a transparent conductive layer including a transparent conductive material. For example, the common electrode layer CEL may include an indium-containing oxide, such as but not limited to indium tin oxide (ITO). The covering layer 150 covers a plurality of filter patterns, and the common electrode layer CEL is disposed on the covering layer 150. The generated electric field between the common electrode layer CEL and the reflective electrode RE is suitable to drive a plurality of liquid-crystal molecules (not shown) of the liquid-crystal layer LCL to be rotated to form an alignment state corresponding to the direction and the intensity of the electric field. By changing the alignment state of the liquid-crystal molecules, the polarization state of the light passing through the liquid-crystal layer LCL is changed to form a light emission brightness corresponding to the alignment state.

In order to form a cavity capable of accommodating the liquid-crystal layer LCL between the first substrate 101 and the second substrate 102, the display panel 10 further includes a plurality of spacers SP disposed between the first substrate 101 and the second substrate 102. In the present embodiment, the spacers SP may be disposed on the second substrate 102 and overlapped with the plurality of reflective electrodes RE and the plurality of filter patterns. That is, the orthographic projection of the spacers SP on the substrate surface 102s of the second substrate 102 is located in the orthographic projection of the plurality of reflective electrodes RE or the plurality of filter patterns on the substrate surface 102s. However, the invention is not limited thereto. In other embodiments, the spacers SP may be disposed on the first substrate 101.

Furthermore, the first substrate 101 has a substrate edge 101e, and is provided with a central display area cDA and an edge display area eDA. The edge display area eDA is located between the central display area cDA and the substrate edge 101e. In the present embodiment, the edge display area eDA may be arranged around the central display area cDA. The plurality of display units DU may include a plurality of central display units cDU disposed in the central display area cDA and a plurality of first edge display units eDU1 and a plurality of second edge display units eDU2 disposed in the edge display area eDA.

From another point of view, the distribution area of the plurality of central display units cDU defines the central display area cDA, and the distribution area of the plurality of first edge display units eDU1 and the plurality of second edge display units eDU2 defines the edge display area eDA. In the present embodiment, please refer to FIG. 1, along the direction (for example, the direction D2 or the direction D1) perpendicular to the substrate edge 101e, the quantity of the edge display units distributed is exemplified by taking one as an example. That is, the width of the edge display area eDA in a direction (such as the direction D2 or the direction D1) perpendicular to the substrate edge 101e is, for example, the width of one display unit DU (i.e., one edge display unit eDU1 or one edge display unit eDU2) in the direction, and the display units DU located at a side of each of the edge display units facing away from the substrate edge 101e are defined as the central display units cDU. In other words, the display units DU provided with one edge display unit from the substrate edge 101e are defined as the central display units cDU.

However, the invention is not limited thereto. In other embodiments, the width of the edge display area eDA in the direction (such as the direction D2 or the direction D1) perpendicular to the substrate edge 101e may also be the width of two or more display units (i.e., two or more edge display units) in the direction, and the display units DU at a side of the two or more edge display units facing away from the substrate edge 101e are defined as the central display units cDU. In other words, the display units DU provided with two edge display units from the substrate edge 101e are defined as the central display units cDU.

In the present embodiment, the plurality of first edge display units eDU1 and the plurality of second edge display units eDU2 are alternately arranged along the direction D1 and the direction D2 respectively. For example, the plurality of first edge display units eDU1 may include a plurality of first edge display units eDUla and a plurality of first edge display units eDU1b. In particular, the plurality of first edge display units eDU1a and a portion of the second edge display units eDU2 are alternately arranged along the direction D1, and the plurality of first edge display units eDU1b and another portion of the second edge display units eDU2 are alternately arranged along the direction D2.

Referring to FIGs. 1, 3, 5, and 7, the plurality of spacers SP may include a plurality of central spacers cSP, a plurality of first edge spacers eSP1, and a plurality of second edge spacers eSP2. The plurality of central spacers cSP are overlapped with each of the central display units cDU. The plurality of first edge spacers eSP1 are overlapped with each of the first edge display units eDU1. The plurality of second edge spacers eSP2 are overlapped with each of the second edge display units eDU2.

It is particularly noted that the quantity (for example, eight as shown in FIG. 5 or FIG. 7, but not limited thereto) of the first edge spacers eSP1 in each of the first edge display units eDU1 is greater than the quantity (for example, six as shown in FIG. 3, but not limited thereto) of the central spacers cSP in each of the central display units cDU. The quantity (for example, six shown in FIG. 3) of the second edge spacers eSP2 in each of the second edge display units eDU2 is different from the quantity (e.g., eight as shown in FIG. 5 or FIG. 7) of the first edge spacers eSP1 in each of the first edge display units eDU1, but is equal to the quantity (for example, six as shown in FIG. 3) of the central spacers cSP in each of the central display units cDU, but the invention is not limited thereto.

Overall, in the present embodiment, the average quantity of edge spacers of a single edge display unit in the edge display area eDA is one more than the average quantity of center spacers of a single central display unit in the central display area cDA. Since the spacers SP are overlapped with the reflective electrode RE and have the property of attenuating reflected light, by making the average quantity of spacers of the display units DU in the edge display area eDA greater than the average quantity of spacers of the display units DU in the central display area cDA, the difference in light reflection performance between the edge display area eDA and the central display area cDA may be reduced, thereby alleviating uneven display brightness of the display panel 10.

Moreover, in the edge display area eDA, any first edge display unit eDU1 having two more spacers than the central display units cDU is separated from another first edge display unit eDU1 by one second edge display unit eDU2 in either the direction D1 or the direction D2. The first edge display unit eDU1 (or the second edge display unit eDU2) is disposed in the edge display area eDA in a skipping arrangement. In other words, the plurality of first edge display units eDU1 and the plurality of second edge display units eDU2 are alternately arranged along the direction D1 or the direction D2. In this way, the arrangement regularity of edge spacers in the edge display area eDA may also be reduced, thereby increasing the distribution uniformity of reflected light.

However, the invention is not limited thereto. In other embodiments, the quantity of the second edge display units eDU2 between any two adjacent first edge display units eDU1 may be two or three or more, or the quantity of the first edge display units eDU1 between any two adjacent second edge display units eDU2 may be two or three or more.

In the present embodiment, two central spacers cSP are provided on each of the filter patterns of the central display units cDU, and each of the filter patterns of the second edge display units eDU2 is provided with two second edge spacers eSP2 (as shown in FIG. 3). Three first edge spacers eSP1 are respectively provided on the filter pattern FP1 and the filter pattern FP3 of the first edge display units eDU1a, and two first edge spacers eSP1 (as shown in FIG. 5) are provided on the filter pattern FP2 thereof, but the invention is not limited thereto. In other embodiments, three first edge spacers eSP1 may be respectively provided on one of the filter pattern FP1 and the filter pattern FP3 and the filter pattern FP2 of the first edge display units eDU1a, and two first edge spacers eSP1 may be provided on the other of the filter pattern FP1 and the filter pattern FP3.

Moreover, the substrate edge 101e includes a first edge e1 extended in the direction D2, and the plurality of first edge display units eDU1b and a portion of the plurality of second edge display units eDU2 are alternately arranged along the first edge e1. Please refer to FIG. 1, FIG. 2, and FIG. 7. It should be noted that in the first edge display units eDU1b, sorting is performed according to the distance between the filter patterns (or the pixel structures PX) and the first edge e1, and from far to near, is sequentially the filter pattern FP1 (or the pixel structure PX1), the filter pattern FP2 (or the pixel structure PX2), and the filter pattern FP3 (or the pixel structure PX3).

It may be seen from FIG. 1 and FIG. 7 that the quantity of the first edge spacers eSP1 overlapped with the filter pattern FP1 and the pixel structure PX1 is less than the quantity of the first edge spacers eSP1 overlapped with the filter pattern FP2 and the pixel structure PX2 and the quantity of the first edge spacers eSP1 overlapped with the filter pattern FP3 and the pixel structure PX3. More specifically, compared with the second edge display units eDU2 also arranged at the first edge e1, the two extra spacers SP (that is, the two first edge spacers eSP1) of the first edge display units eDU1b are preferentially disposed on the filter pattern FP3 closest to the first edge e1 and the filter pattern FP2 next closest to the first edge e1.

It should be understood that if the first edge display units eDU1b are located at another side of the display panel 10 relative to the first edge e1, the two extra spacers SP are preferentially disposed on the filter pattern FP1 closest to the other edge (not shown) and the filter pattern FP2 next closest to the other edge.

Via the arrangement in which the distribution density of the edge spacers in the edge display area eDA is gradually increased approaching the substrate edge 101e, the brightness uniformity of the display panel 10 when displaying an image may be further improved.

Some other embodiments will be enumerated below to describe the disclosure in detail, wherein the same members are marked with the same reference numerals, and descriptions of the same technical content is omitted. For the omitted portions, please refer to the above embodiments, which are not be repeated hereafter.

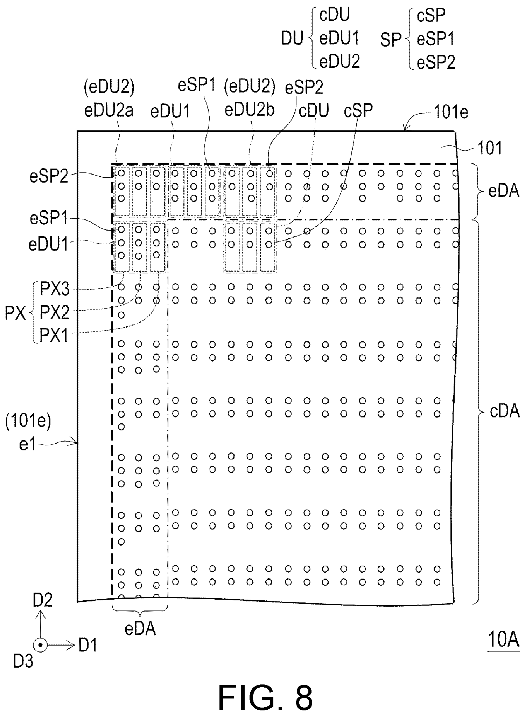

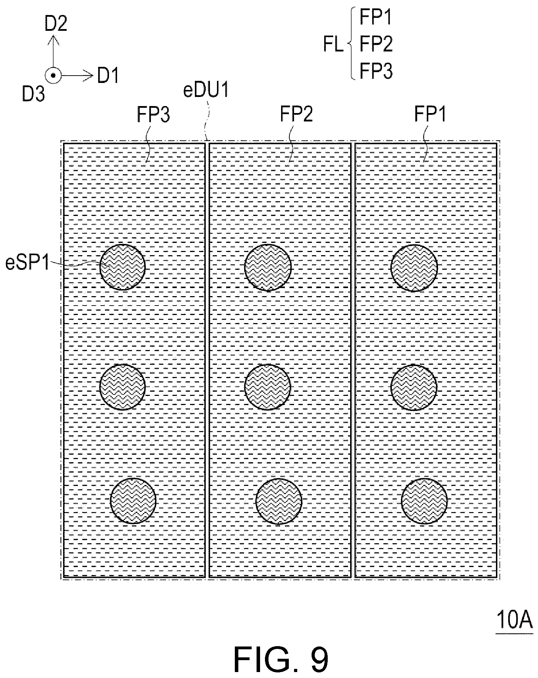

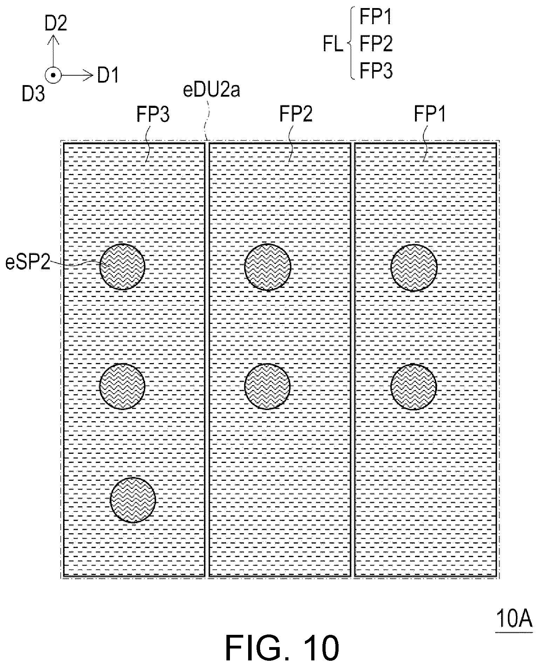

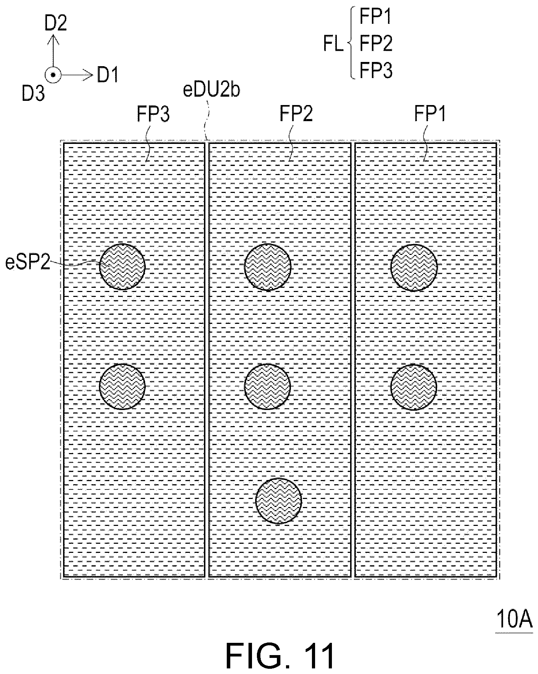

FIG. 8 is a schematic front view of a display panel according to the second embodiment of the invention. FIG. 9 is an enlarged schematic view of a portion of the film layer of the first edge display unit of FIG. 8. FIG. 10 is an enlarged schematic view of a portion of the film layer of the second edge display unit of FIG. 8. FIG. 11 is an enlarged schematic view of a portion of the film layer of another second edge display unit of FIG. 8.

Please refer to FIG. 8 to FIG. 11. The difference between a display panel 10A of the present embodiment and the display panel 10 of FIG. 1 is that the quantity and the arrangement of edge spacers are different. Specifically, in the present embodiment, the quantity of the second edge spacers eSP2 of the second edge display units eDU2 is less than the quantity of the first edge spacers eSP1 of the first edge display units eDU1 and greater than the quantity of the central spacers cSP of the central display units cDU.

For example, the quantity of the central spacers cSP of the central display units cDU is, for example, 6. The quantity of the first edge spacers eSP1 of the first edge display units eDU1 is, for example, nine. The quantity of the second edge spacers eSP2 of the second edge display units eDU2 is, for example, seven. In the present embodiment, each of the three filter patterns FP1 to FP3 (or the three pixel structures PX1 to PX3) in the first edge display units eDU1 is overlapped with three first edge spacers eSP1 (as shown in FIG. 9). In other words, compared to the central display units cDU, the three extra spacers SP (i.e., the first edge spacers eSP1) in the first edge display units eDU1 are respectively overlapped with three filter patterns (or three pixel structures).

Overall, in the present embodiment, the average quantity of edge spacers of a single edge display unit in the edge display area eDA is two more than the average quantity of center spacers of a single central display unit in the central display area cDA. Since the spacers SP are overlapped with the reflective electrode RE and have the property of attenuating reflected light, by making the average quantity of spacers of the display units DU in the edge display area eDA greater than the average quantity of spacers of the display units DU in the central display area cDA, the difference in light reflection performance between the edge display area eDA and the central display area cDA may be reduced, thereby alleviating the issue of uneven display brightness of the display panel 10A.

Moreover, in the present embodiment, the plurality of second edge display units eDU2 may include a plurality of second edge display units eDU2a and a plurality of second edge display units eDU2b. In particular, the plurality of second edge display units eDU2a and the portion of the first edge display units eDU1 are alternately arranged along the direction D2, and the plurality of second edge display units eDU2b and another portion of the first edge display units eDU1 are alternately arranged along the direction D1. The first edge display units eDU1 (or the second edge display units eDU2) are disposed in the edge display area eDA in a skipping arrangement. In other words, the plurality of first edge display units eDU1 and the plurality of second edge display units eDU2 are alternately arranged along the direction D1 or the direction D2. In this way, the arrangement regularity of edge spacers in the edge display area eDA may also be reduced, thereby increasing the distribution uniformity of reflected light.

However, the invention is not limited thereto. In other embodiments, the quantity of the second edge display units eDU2 between any two adjacent first edge display units eDU1 may be two or three or more, or the quantity of the first edge display units eDU1 between any two adjacent second edge display units eDU2 may be two or three or more.

It should be noted that, each of the plurality of second edge display units eDU2a spaced apart along the first edge e1 is provided with three second edge spacers eSP2 on the filter pattern FP3 (or the pixel structure PX3) closest to the first edge e1, and two second edge spacers eSP2 (as shown in FIG. 8 and FIG. 10) are respectively provided on the filter pattern FP2 (or the pixel structure PX2) closest to the first edge e1 and the filter pattern FP1 (or the pixel structure PX1) furthest from the first edge e1. Accordingly, the brightness uniformity of the display panel 10A when displaying an image may be further improved.

Moreover, in the present embodiment, the filter pattern FP1 and the filter pattern FP3 of the second edge display units eDU2b are each provided with two second edge spacers eSP2, and the filter pattern FP2 thereof is provided with three second edge spacers eSP2. However, the invention is not limited thereto. In other embodiments, three second edge spacers eSP2 may be provided on one of the filter pattern FP1 and the filter pattern FP3 of the second edge display units eDU2b, and two second edge spacers eSP2 may be respectively provided on the other of the filter pattern FP1 and the filter pattern FP3 and the filter pattern FP2 of the second edge display units eDU2b.

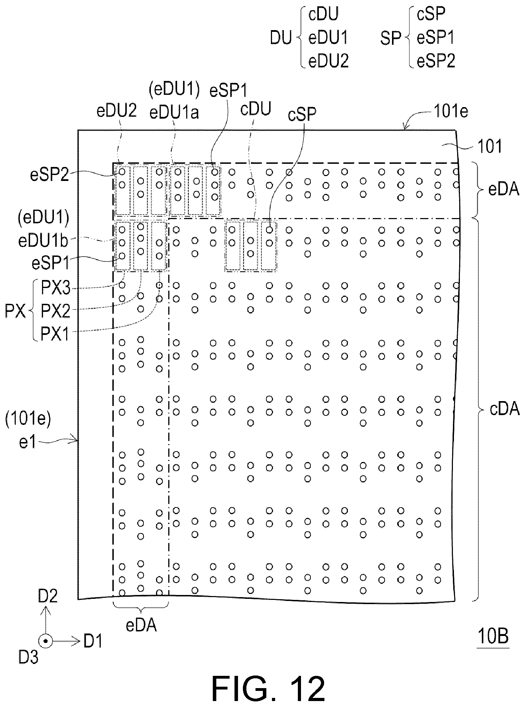

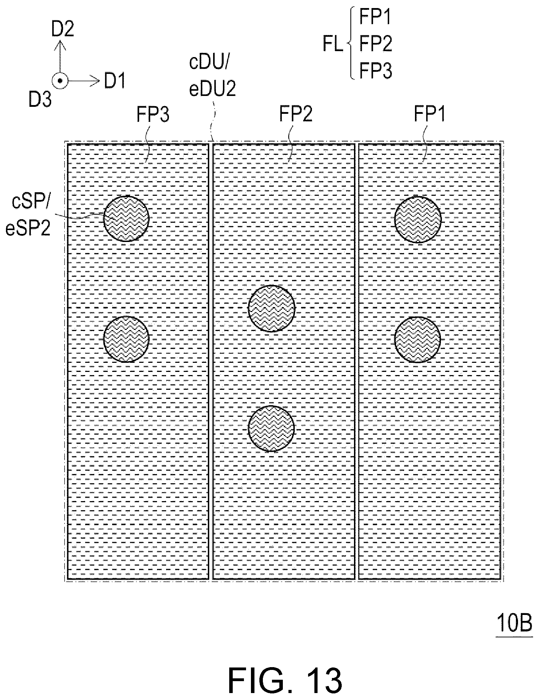

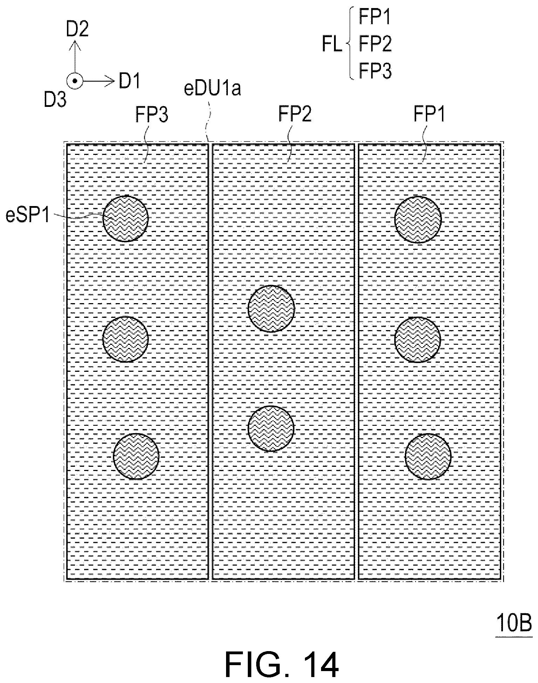

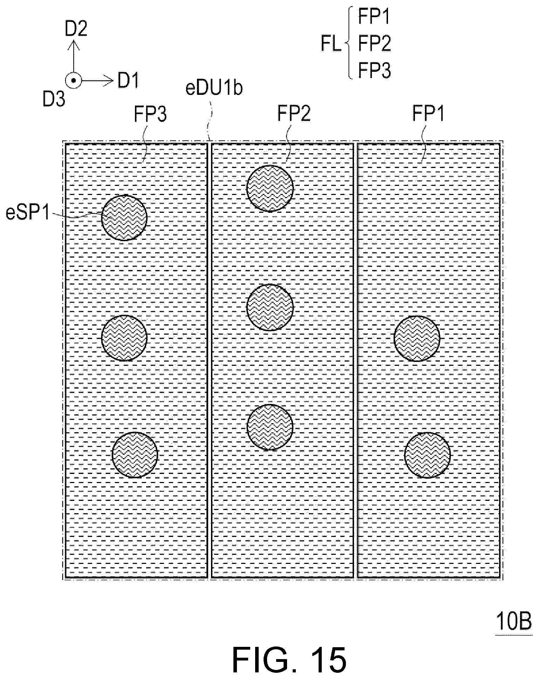

FIG. 12 is a schematic front view of a display panel according to the third embodiment of the invention. FIG. 13 is an enlarged schematic view of a portion of a film layer of the central display unit of FIG. 12. FIG. 14 is an enlarged schematic view of a portion of the film layer of the first edge display unit of FIG. 12. FIG. 15 is an enlarged schematic view of a portion of the film layer of another first edge display unit of FIG. 12.

Please refer to FIG. 12 to FIG. 15. The difference between a display panel 10B of the present embodiment and the display panel 10 of FIG. 1 is that the spacers are arranged differently. Specifically, in the present embodiment, regardless of whether it is in any display unit DU located in the central display area cDA or the edge display area eDA, any spacer disposed on any pixel structure PX is offset from each of the spacers disposed on another adjacent pixel structure PX along the direction D1.

For example, as shown in FIG. 12 and FIG. 13, in the central display units cDU, each of the central spacers cSP overlapped with the filter pattern FP2 (or the pixel structure PX2) is offset along the direction D1 from each of the central spacers cSP overlapped with the filter pattern FP1 (or the pixel structure PX1) or the filter pattern FP3 (or the pixel structure PX3). Similarly, in the second edge display units eDU2, each of the second edge spacers eSP2 overlapped with the filter pattern FP2 (or the pixel structure PX2) is offset along the direction D1 from each of the second edge spacers eSP2 overlapped with the filter pattern FP1 (or the pixel structure PX1) or the filter pattern FP3 (or the pixel structure PX3).

As shown in FIG. 12 and FIG. 14, in the first edge display units eDU1, each of the first edge spacers eSP1 overlapped with the filter pattern FP2 (or the pixel structure PX2) is offset along the direction D1 from each of the first edge spacers eSP1 overlapped with the filter pattern FP1 (or the pixel structure PX1) or the filter pattern FP3 (or the pixel structure PX3). As shown in FIG. 12 and FIG. 15, in the first edge display units eDU1b, each of the first edge spacers eSP1 overlapped with the filter pattern FP2 (or the pixel structure PX2) is offset along the direction D1 from each of the first edge spacers eSP1 overlapped with the filter pattern FP1 (or the pixel structure PX1) or the filter pattern FP3 (or the pixel structure PX3).

Via the above misalignment design, the light reflection effect of the display panel 10B may be further uniformized, thus helping to meet different visual effect design requirements.

Based on the above, in the display panel of an embodiment of the invention, the liquid-crystal layer and the plurality of spacers are provided between the first substrate and the second substrate. The spacers are dispersed among the plurality of central display units in the central display area and the plurality of edge display units in the edge display area. Since the quantity of gaps in each of the edge display units is greater than the quantity of gaps in each of the central display units, the difference in display brightness between the edge display area and the central display area of the display panel may be effectively reduced, thus helping to improve the uniformity of display brightness of the display panel.

## Claims

1. A display panel (10, 10A, 10B), comprising:
a first substrate (101) having a substrate edge (101e) and provided with a central display area (cDA) and an edge display area (eDA), wherein the edge display area (eDA) is located between the central display area (cDA) and the substrate edge (101e);
a second substrate (102) overlapped with the first substrate (101);
a liquid-crystal layer (LCL) disposed between the first substrate (101) and the second substrate (102);
a plurality of central display units (cDU) disposed in the central display area (cDA);
a plurality of first edge display units (eDU1, eDU1a, eDU1b) disposed in the edge display area (eDA); and
a plurality of spacers (SP) disposed between the first substrate (101) and the second substrate (102) and dispersed among the central display units (cDU) and the first edge display units (eDU1, eDU1a, eDU1b), wherein the spacers (SP) comprise:
a plurality of central spacers (cSP) overlapped with each of the central display units (cDU); and
a plurality of first edge spacers (eSP1) overlapped with each of the first edge display units (eDU1, eDU1a, eDU1b), wherein a quantity of the first edge spacers (eSP1) in each of the first edge display units (eDU1, eDU1a, eDU1b) is greater than a quantity of the central spacers (cSP) in each of the central display units (cDU),
wherein the display panel (10, 10A, 10B) is **characterized in that**
each of the plurality of central display units (cDU) and the plurality of first edge display units (eDU1, eDU1a, eDU1b) includes a plurality of pixel structures (PX), each of the plurality of pixel structures (PX) includes an active element (T) and a reflective electrode (RE), the reflective electrode (RE) of each of the plurality of pixel structures (PX) is overlapped with at least one of the plurality of spacers (SP), the active element (T) is covered with an insulating layer (130), the insulating layer (130) has an opening (OP), the reflective electrode (RE) is disposed on the insulating layer (130) and electrically connected to the active element via the opening (OP), and an orthographic projection of the opening (OP) on the first substrate (101) is located in an orthographic projection of the reflective electrode (RE) on the first substrate (101).

2. The display panel (10, 10A, 10B) of claim 1, further comprising:
a plurality of second edge display units (eDU, eDU2a, eDU2b) disposed in the edge display area (eDA), wherein the first edge display units (eDU1, eDU1a, eDU1b) and the second edge display units (eDU, eDU2a, eDU2b) are alternately arranged along at least one direction, the spacers (SP) also comprise a plurality of second edge spacers (eSP2) overlapped with each of the second edge display units (eDU, eDU2a, eDU2b), and a quantity of the second edge spacers (eSP2) in each of the second edge display units (eDU, eDU2a, eDU2b) is different from the quantity of the first edge spacers (eSP1) in each of the first edge display units (eDU1, eDU1a, eDU1b).

3. The display panel (10, 10A, 10B) of claim 2, wherein the quantity of the second edge spacers (eSP2) in each of the second edge display units (eDU, eDU2a, eDU2b) is equal to the quantity of the central spacers (cSP) in each of the central display units (cDU).

4. The display panel (10, 10A, 10B) of claim 2, wherein the quantity of the second edge spacers (eSP2) in each of the second edge display units (eDU, eDU2a, eDU2b) is greater than the quantity of the central spacers (cSP) in each of the central display units (cDU).

5. The display panel (10, 10A, 10B) of claim 4, wherein the quantity of the second edge spacers (eSP2) in each of the second edge display units (eDU, eDU2a, eDU2b) is less than the quantity of the first edge spacers (eSP1) in each of the first edge display units (eDU1, eDU1a, eDU1b).

6. The display panel (10, 10A, 10B) of claim 1, wherein each of the central display units (cDU) comprises a first pixel structure (PX1) and a second pixel structure (PX2) arranged along the first direction (D1), and each of the central spacers (cSP) overlapped with the first pixel structure (PX1) is offset along the first direction (D1) from each of the central spacers (cSP) overlapped with the second pixel structure (PX2).

7. The display panel (10, 10A, 10B) of claim 6, wherein each of the first edge display units (eDU1, eDU1a, eDU1b) comprises another first pixel structure (PX1) and another second pixel structure (PX2) arranged along the first direction (D1), and each of the first edge spacers (eSP1) overlapped with the another first pixel structure (PX1) is offset along the first direction (D1) from each of the first edge spacers (eSP1) overlapped with the another second pixel structure (PX2).

8. The display panel (10, 10A, 10B) of claim 7, further comprising:
a plurality of second edge display units (eDU, eDU2a, eDU2b) disposed in the edge display area (eDA), wherein the first edge display units (eDU1, eDU1a, eDU1b) and the second edge display units (eDU, eDU2a, eDU2b) are alternately arranged along at least one direction, the spacers (SP) also comprise a plurality of second edge spacers (eSP2) overlapped with each of the second edge display units (eDU, eDU2a, eDU2b), and a quantity of the second edge spacers (eSP2) in each of the second edge display units (eDU, eDU2a, eDU2b) is different from the quantity of the first edge spacers (eSP1) in each of the first edge display units (eDU1, eOU1a, eDU1Db).

9. The display panel (10, 10A, 10B) of claim 8, wherein each of the second edge display units (eDU, eDU2a, eDU2b) comprises yet another first pixel structure (PX1) and yet another second pixel structure (PX2) arranged along the first direction (D1), and each of the second edge spacers (eSP2) overlapped with the yet another first pixel structure (PX1) is offset along the first direction (D1) from each of the second edge spacers (eSP2) overlapped with the yet another second pixel structure (PX2).

10. The display panel (10, 10A, 10B) of claim 1, wherein each of the first edge display units (eDU1, eDU1a, eDU1b) comprises a first pixel structure (PX1) and a second pixel structure (PX2) arranged along a first direction (D1), the substrate edge (101e) comprises a first edge (e1) extended in a second direction (D2), the second direction (D2) is intersected with the first direction (D1), the second pixel structure (PX2) is located between the first pixel structure (PX1) and the first edge (e1), and a quantity of a portion in the first edge spacers (eSP1) overlapped with the second pixel structure (PX2) is greater than a quantity of another portion in the first edge spacers (eSP1) overlapped with the first pixel structure (PX1).

## Patentansprüche

1. Anzeigepanel (10, 10A, 10B), umfassend:
ein erstes Substrat (101), das einen Substratrand (101e) aufweist und mit einem zentralen Anzeigebereich (cDA) und einem Randanzeigebereich (eDA) versehen ist, wobei sich der Randanzeigebereich (eDA) zwischen dem zentralen Anzeigebereich (cDA) und dem Substratrand (101e) befindet;
ein zweites Substrat (102), das das erste Substrat (101) überlappt;
eine Flüssigkristallschicht (LCL), die zwischen dem ersten Substrat (101) und dem zweiten Substrat (102) angeordnet ist;
eine Vielzahl von zentralen Anzeigeeinheiten (cDU), die in dem zentralen Anzeigebereich (cDA) angeordnet sind;
eine Vielzahl von ersten Randanzeigeeinheiten (eDU1, eDU1a, eDU1b), die in dem Randanzeigebereich (eDA) angeordnet sind; und
eine Vielzahl von Abstandshaltern (SP), die zwischen dem ersten Substrat (101) und dem zweiten Substrat (102) angeordnet und zwischen den zentralen Anzeigeeinheiten (cDU) und den ersten Randanzeigeeinheiten (eDU1, eDU1a, eDU1b) verteilt sind, wobei die Abstandshalter (SP) umfassen:
eine Vielzahl von zentralen Abstandshaltern (cSP), die mit jeder der zentralen Anzeigeeinheiten (cDU) überlappen; und
eine Vielzahl von ersten Randabstandshaltern (eSP1), die mit jeder der ersten Randanzeigeeinheiten (eDU1, eDU1a, eDU1b) überlappen, wobei eine Anzahl der ersten Randabstandshalter (eSP1) in jeder der ersten Randanzeigeeinheiten (eDU1, eDU1a, eDU1b) größer als eine Anzahl der zentralen Abstandshalter (cSP) in jeder der zentralen Anzeigeeinheiten (cDU) ist,
wobei das Anzeigepanel (10, 10A, 10B) **dadurch gekennzeichnet ist, dass**
jede der Vielzahl von zentralen Anzeigeeinheiten (cDU) und der Vielzahl von ersten Randanzeigeeinheiten (eDU1, eDU1a, eDU1b) eine Vielzahl von Pixelstrukturen (PX) umfasst, jede der Vielzahl von Pixelstrukturen (PX) ein aktives Element (T) und eine reflektierende Elektrode (RE) umfasst, die reflektierende Elektrode (RE) jeder der Vielzahl von Pixelstrukturen (PX) mit mindestens einem der Vielzahl von Abstandshaltern (SP) überlappt, das aktive Element (T) mit einer Isolierschicht (130) bedeckt ist, die Isolierschicht (130) eine Öffnung (OP) aufweist, die reflektierende Elektrode (RE) auf der Isolierschicht (130) angeordnet und über die Öffnung (OP) elektrisch mit dem aktiven Element verbunden ist, und sich eine orthogonale Projektion der Öffnung (OP) auf das erste Substrat (101) in einer orthogonalen Projektion der reflektierenden Elektrode (RE) auf das erste Substrat (101) befindet.

2. Anzeigepanel (10, 10A, 10B) nach Anspruch 1, ferner umfassend:
eine Vielzahl von zweiten Randanzeigeeinheiten (eDU, eDU2a, eDU2b), die in dem Randanzeigebereich (eDA) angeordnet sind, wobei die ersten Randanzeigeeinheiten (eDU1, eDU1a, eDU1b) und die zweiten Randanzeigeeinheiten (eDU, eDU2a, eDU2b) abwechselnd entlang mindestens einer Richtung angeordnet sind, die Abstandshalter (SP) zudem eine Vielzahl von zweiten Randabstandshaltern (eSP2) umfassen, die mit jeder der zweiten Randanzeigeeinheiten (eDU, eDU2a, eDU2b) überlappen, und sich eine Anzahl der zweiten Randabstandshalter (eSP2) in jeder der zweiten Randanzeigeeinheiten (eDU, eDU2a, eDU2b) von der Anzahl der ersten Randabstandshalter (eSP1) in jeder der ersten Randanzeigeeinheiten (eDU1, eDU1a, eDU1b) unterscheidet.

3. Anzeigepanel (10, 10A, 10B) nach Anspruch 2, wobei die Anzahl der zweiten Randabstandshalter (eSP2) in jeder der zweiten Randanzeigeeinheiten (eDU, eDU2a, eDU2b) gleich der Anzahl der zentralen Abstandshalter (cSP) in jeder der zentralen Anzeigeeinheiten (cDU) ist.

4. Anzeigepanel (10, 10A, 10B) nach Anspruch 2, wobei die Anzahl der zweiten Randabstandshalter (eSP2) in jeder der zweiten Randanzeigeeinheiten (eDU, eDU2a, eDU2b) größer als die Anzahl der zentralen Abstandshalter (cSP) in jeder der zentralen Anzeigeeinheiten (cDU) ist.

5. Anzeigepanel (10, 10A, 10B) nach Anspruch 4, wobei die Anzahl der zweiten Randabstandshalter (eSP2) in jeder der zweiten Randanzeigeeinheiten (eDU, eDU2a, eDU2b) kleiner als die Anzahl der ersten Randabstandshalter (eSP1) in jeder der ersten Randanzeigeeinheiten (eDU1, eDU1a, eDU1b) ist.

6. Anzeigepanel (10, 10A, 10B) nach Anspruch 1, wobei jede der zentralen Anzeigeeinheiten (cDU) eine erste Pixelstruktur (PX1) und eine zweite Pixelstruktur (PX2) umfasst, die entlang der ersten Richtung (D1) angeordnet sind, und jeder der zentralen Abstandshalter (cSP), die mit der ersten Pixelstruktur (PX1) überlappen, entlang der ersten Richtung (D1) gegenüber jedem der zentralen Abstandshalter (cSP), die mit der zweiten Pixelstruktur (PX2) überlappen, versetzt ist.

7. Anzeigepanel (10, 10A, 10B) nach Anspruch 6, wobei jede der ersten Randanzeigeeinheiten (eDU1, eDU1a, eDU1b) eine weitere erste Pixelstruktur (PX1) und eine weitere zweite Pixelstruktur (PX2) umfasst, die entlang der ersten Richtung (D1) angeordnet sind, und jeder der ersten Randabstandshalter (eSP1), die mit der weiteren ersten Pixelstruktur (PX1) überlappen, entlang der ersten Richtung (D1) gegenüber jedem der ersten Randabstandshalter (eSP1), die mit der weiteren zweiten Pixelstruktur (PX2) überlappen, versetzt ist.

8. Anzeigepanel (10, 10A, 10B) nach Anspruch 7, ferner umfassend:
eine Vielzahl von zweiten Randanzeigeeinheiten (eDU, eDU2a, eDU2b), die in dem Randanzeigebereich (eDA) angeordnet sind, wobei die ersten Randanzeigeeinheiten (eDU1, eDU1a, eDU1b) und die zweiten Randanzeigeeinheiten (eDU, eDU2a, eDU2b) abwechselnd entlang mindestens einer Richtung angeordnet sind, die Abstandshalter (SP) zudem eine Vielzahl von zweiten Randabstandshaltern (eSP2) umfassen, die mit jeder der zweiten Randanzeigeeinheiten (eDU, eDU2a, eDU2b) überlappen, und sich eine Anzahl der zweiten Randabstandshalter (eSP2) in jeder der zweiten Randanzeigeeinheiten (eDU, eDU2a, eDU2b) von der Anzahl der ersten Randabstandshalter (eSP1) in jeder der ersten Randanzeigeeinheiten (eDU1, eDU1a, eDU1b) unterscheidet.

9. Anzeigepanel (10, 10A, 10B) nach Anspruch 8, wobei jede der zweiten Randanzeigeeinheiten (eDU, eDU2a, eDU2b) eine noch weitere erste Pixelstruktur (PX1) und eine noch weitere zweite Pixelstruktur (PX2) umfasst, die entlang der ersten Richtung (D1) angeordnet sind, und jeder der zweiten Randabstandshalter (eSP2), die mit der noch weiteren ersten Pixelstruktur (PX1) überlappen, entlang der ersten Richtung (D1) gegenüber jedem der zweiten Randabstandshalter (eSP2), die mit der noch weiteren zweiten Pixelstruktur (PX2) überlappen, versetzt ist.

10. Anzeigepanel (10, 10A, 10B) nach Anspruch 1, wobei jede der ersten Randanzeigeeinheiten (eDU1, eDU1a, eDU1b) eine erste Pixelstruktur (PX1) und eine zweite Pixelstruktur (PX2) umfasst, die entlang einer ersten Richtung (D1) angeordnet sind, der Substratrand (101e) einen ersten Rand (e1) umfasst, der sich in einer zweiten Richtung (D2) erstreckt, die zweite Richtung (D2) die erste Richtung (D1) schneidet, sich die zweite Pixelstruktur (PX2) zwischen der ersten Pixelstruktur (PX1) und dem ersten Rand (e1) befindet und eine Anzahl eines Abschnitts der ersten Randabstandshalter (eSP1), die mit der zweiten Pixelstruktur (PX2) überlappen, größer als eine Anzahl eines anderen Abschnitts der ersten Randabstandshalter (eSP1), die mit der ersten Pixelstruktur (PX1) überlappen, ist.

## Revendications

1. Panneau d'affichage (10, 10A, 10B), comprenant :
un premier substrat (101) présentant un bord de substrat (101e) et muni d'une zone d'affichage centrale (cDA) et d'une zone d'affichage périphérique (eDA), la zone d'affichage périphérique (eDA) étant située entre la zone d'affichage centrale (cDA) et le bord de substrat (101e) ;
un deuxième substrat (102) superposé au premier substrat (101) ;
une couche de cristaux liquides (LCL) disposée entre le premier substrat (101) et le deuxième substrat (102) ;
une pluralité d'unités d'affichage centrales (cDU) disposées dans la zone d'affichage centrale (cDA) ;
une pluralité de premières unités d'affichage périphériques (eDU1, eDU1a, eDU1b) disposées dans la zone d'affichage périphérique (eDA) ; et
une pluralité d'espaceurs (SP) disposées entre le premier substrat (101) et le deuxième substrat (102) et réparties parmi les unités d'affichage centrales (cDU) et les premières unités d'affichage périphériques (eDU1, eDU1a, eDU1b), dans lequel les espaceurs (SP) comprennent :
une pluralité d'espaceurs centrales (cSP) superposées à chacune des unités d'affichage centrales (cDU) ; et
une pluralité de premières espaceurs de bord (eSP1) superposées à chacune des premières unités d'affichage de bord (eDU1, eDU1a, eDU1b), le nombre de ces premières espaceurs de bord (eSP1) dans chacune des premières unités d'affichage de bord (eDU1, eDU1a, eDU1b) étant supérieur au nombre d'espaceurs centrales (cSP) dans chacune des unités d'affichage centrales (cDU),
le panneau d'affichage (10, 10A, 10B) est **caractérisé en ce que**
chacune des différentes unités d'affichage centrales (cDU) et des différentes premières unités d'affichage périphériques (eDU1, eDU1a, eDU1b) comprend une pluralité de structures de pixels (PX), chacune de ces structures de pixels (PX) comprenant un élément actif (T) et une électrode réfléchissante (RE), l'électrode réfléchissante (RE) de chacune des structures de pixels (PX) chevauche au moins l'une des espaceurs (SP), l'élément actif (T) est recouvert d'une couche isolante (130), la couche isolante (130) présente une ouverture (OP), l'électrode réfléchissante (RE) est disposée sur la couche isolante (130) et connectée électriquement à l'élément actif via l'ouverture (OP), et une projection orthogonale de l'ouverture (OP) sur le premier substrat (101) est située dans une projection orthogonale de l'électrode réfléchissante (RE) sur le premier substrat (101).

2. Panneau d'affichage (10, 10A, 10B) selon la revendication 1, comprenant en outre :
une pluralité de deuxièmes unités d'affichage de bord (eDU, eDU2a, eDU2b) disposées dans la zone d'affichage de bord (eDA), dans lequel les premières unités d'affichage de bord (eDU1, eDU1a, eDU1b) et les deuxièmes unités d'affichage de bord (eDU, eDU2a, eDU2b) sont disposées en alternance le long d'au moins une direction, les espaceurs (SP) comprenant également une pluralité de deuxièmes espaceurs de bord (eSP2) qui se superposent à chacune des deuxièmes unités d'affichage de bord (eDU, eDU2a, eDU2b), et le nombre de ces deuxièmes espaceurs de bord (eSP2) dans chacune des deuxièmes unités d'affichage de bord (eDU, eDU2a, eDU2b) est différent du nombre de premières espaceurs de bord (eSP1) dans chacune des premières unités d'affichage de bord (eDU1, eDU1a, eDU1b).

3. Panneau d'affichage (10, 10A, 10B) selon la revendication 2, dans lequel la nombre de deuxièmes espaceurs de bord (eSP2) dans chacune des deuxièmes unités d'affichage de bord (eDU, eDU2a, eDU2b) est égale à la nombre d'espaceurs centrales (cSP) dans chacune des unités d'affichage centrales (cDU).

4. Panneau d'affichage (10, 10A, 10B) selon la revendication 2, dans lequel le nombre de deuxièmes espaceurs de bord (eSP2) dans chacune des deuxièmes unités d'affichage de bord (eDU, eDU2a, eDU2b) est supérieur au nombre d'espaceurs centrales (cSP) dans chacune des unités d'affichage centrales (cDU).

5. Panneau d'affichage (10, 10A, 10B) selon la revendication 4, dans lequel le nombre de deuxièmes espaceurs de bord (eSP2) dans chacune des deuxièmes unités d'affichage de bord (eDU, eDU2a, eDU2b) est inférieur au nombre de premières espaceurs de bord (eSP1) dans chacune des premières unités d'affichage de bord (eDU1, eDU1a, eDU1b).

6. Panneau d'affichage (10, 10A, 10B) selon la revendication 1, dans lequel chacune des unités d'affichage centrales (cDU) comprend une première structure de pixels (PX1) et une deuxième structure de pixels (PX2) disposées le long de la première direction (D1), et chacune des espaceurs centrales (cSP) qui chevauche la première structure de pixels (PX1) est décalée, le long de la première direction (D1), par rapport à chacune des espaceurs centrales (cSP) qui chevauche la deuxième structure de pixels (PX2).

7. Panneau d'affichage (10, 10A, 10B) selon la revendication 6, dans lequel chacune des premières unités d'affichage de bord (eDU1, eDU1a, eDU1b) comprend une autre première structure de pixels (PX1) et une autre deuxième structure de pixels (PX2) disposées le long de la première direction (D1), et chacun des premiers espaceurs de bord (eSP1) qui chevauche ladite autre première structure de pixels (PX1) est décalé, le long de la première direction (D1), par rapport à chacun des premiers espaceurs de bord (eSP1) qui chevauche ladite autre deuxième structure de pixels (PX2).

8. Panneau d'affichage (10, 10A, 10B) selon la revendication 7, comprenant en outre :
une pluralité de deuxièmes unités d'affichage de bord (eDU, eDU2a, eDU2b) disposées dans la zone d'affichage de bord (eDA), dans lequel les premières unités d'affichage de bord (eDU1, eDU1a, eDU1b) et les deuxièmes unités d'affichage de bord (eDU, eDU2a, eDU2b) sont disposées en alternance le long d'au moins une direction, les espaceurs (SP) comprennent également une pluralité de deuxièmes espaceurs de bord (eSP2) superposées à chacune des deuxièmes unités d'affichage de bord (eDU, eDU2a, eDU2b), et le nombre de deuxièmes espaceurs de bord (eSP2) dans chacune des deuxièmes unités d'affichage de bord (eDU, eDU2a, eDU2b) est différente de la nombre d'espaceurs de premier bord (eSP1) dans chacune des unités d'affichage de premier bord (eDU1, eDU1a, eDU1b).

9. Panneau d'affichage (10, 10A, 10B) selon la revendication 8, dans lequel chacune des deuxièmes unités d'affichage de bord (eDU, eDU2a, eDU2b) comprend une autre première structure de pixel (PX1) et une autre deuxième structure de pixel (PX2) disposées le long de la première direction (D1), et chacune des deuxièmes espaceurs de bord (eSP2) chevauchant cette autre première structure de pixels (PX1) est décalée, le long de la première direction (D1), par rapport à chacune des deuxièmes espaceurs de bord (eSP2) chevauchant cette autre deuxième structure de pixels (PX2).

10. Panneau d'affichage (10, 10A, 10B) selon la revendication 1, dans lequel chacune des premières unités d'affichage de bord (eDU1, eDU1a, eDU1b) comprend une première structure de pixel (PX1) et une deuxième structure de pixel (PX2) disposées le long d'une première direction (D1), le bord du substrat (101e) comprend un premier bord (e1) s'étendant dans une deuxième direction (D2), la deuxième direction (D2) croise la première direction (D1), la deuxième structure de pixels (PX2) est située entre la première structure de pixels (PX1) et le premier bord (e1), et la partie des premiers espaceurs de bord (eSP1) qui chevauche la deuxième structure de pixels (PX2) est plus importante que la partie des premiers espaceurs de bord (eSP1) qui chevauche la première structure de pixels (PX1).
